# EUROPEAN PATENT SPECIFICATION

(11) **EP 4 312 153 B1**
(45) Date of publication and mention of the grant of the patent: **29.10.2025**
(21) Application number: 23186258.2
(22) Date of filing: 19.07.2023
(51) Int. Cl.: G06K 15/02, G06K 15/10, B41J 2/21, B41J 25/00, B41J 29/38, B41J 29/393

(54) **IMAGE FORMING APPARATUS, CONTROL METHOD FOR IMAGE FORMING APPARATUS, AND CONTROL PROGRAM FOR IMAGE FORMING APPARATUS**
BILDERZEUGUNGSVORRICHTUNG, STEUERUNGSVERFAHREN FÜR BILDERZEUGUNGSVORRICHTUNG UND STEUERUNGSPROGRAMM FÜR BILDERZEUGUNGSVORRICHTUNG
APPAREIL DE FORMATION D'IMAGES, PROCÉDÉ DE COMMANDE POUR APPAREIL DE FORMATION D'IMAGES ET PROGRAMME DE COMMANDE POUR APPAREIL DE FORMATION D'IMAGES

(30) Priority: 27.07.2022 JP 2022119565
(43) Date of publication of application: 31.01.2024
(73) Proprietor: KONICA MINOLTA, INC., Tokyo 100-7015 (JP)
(72) Inventor: SHIGENAGA, YASUNORI, Tokyo (JP)
(74) Representative: Gille Hrabal Partnerschaftsgesellschaft mbB Patentanwälte

(56) References cited:
- EP-A1- 1 488 926
- EP-A1- 3 647 060
- US-A1- 2007 165 068
- US-B2- 9 302 471

## Description

### Background

### Technological Field

The present invention relates to an image forming apparatus, a control method for the image forming apparatus, and a control program for the image forming apparatus.

### Description of the Related art

Conventionally, there is an inkjet type image forming apparatus that forms an image by discharging (ejecting) ink from a nozzle formed in a recording head and landing the ink on a recording medium such as paper while relatively moving the recording head and the recording medium.

In this type of image forming apparatus, for the purpose of improving the recording speed, an apparatus configuration is adopted in which a plurality of recording heads each having a nozzle row formed therein is arranged in a staggered manner along a direction intersecting the direction of the relative movement described above (that is, along a width direction of the recording medium (hereinafter referred to as "width direction")) to configure a long line head, and an image is formed by the long line head. Such an image forming apparatus can form an image by causing the line head to scan the recording paper only once along a conveyance direction (also referred to as a one-pass method).
Patent Literature 2: JP 2008-294609 A
Patent Literature 2: EP 1488 926 A1
Patent Literature 3: EP 3 647 060 A1

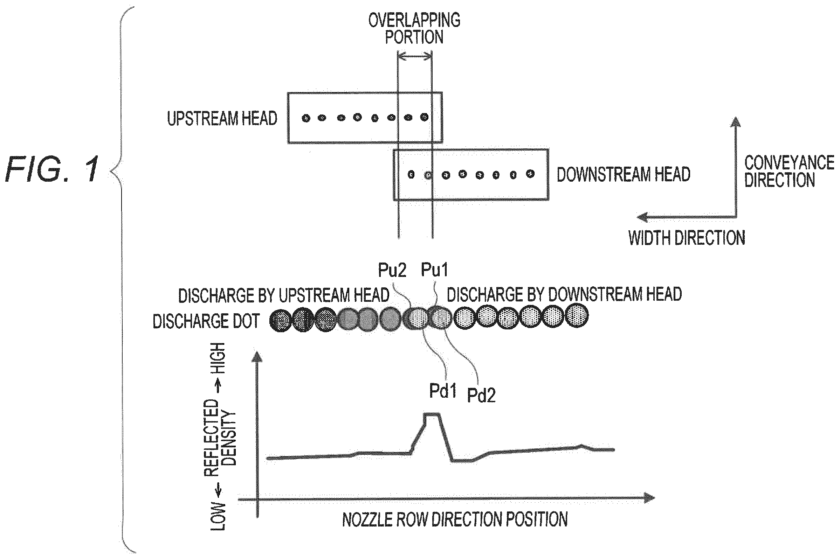

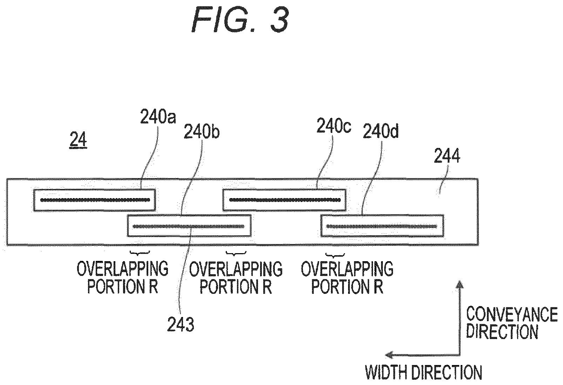

By the way, in this type of image forming apparatus, generally, the plurality of recording heads arranged in a staggered manner along the width direction is disposed such that adjacent recording heads overlap each other in the line head, and an overlapping portion in which discharge target regions overlap between other adjacent recording heads (hereinafter, simply referred to as an "overlapping portion") is formed at an end portion of the nozzle row of each recording head (see Figs. 1 and 3).

Fig. 1 is a diagram illustrating an example of an arrangement aspect of two adjacent recording heads arranged in a line head and an example of a discharge aspect of ink discharged from each of the two adjacent recording heads.

Normally, at the overlapping portion, ink is discharged from both a nozzle of an upstream recording head (this means a recording head arranged on the upstream side in the conveyance direction in the line head. The same applies hereinafter) and a nozzle of a downstream recording head (this means a recording head arranged on the downstream side in the conveyance direction in the line head. The same applies hereinafter), and the density of an image at the overlapping portion is adjusted.

Ideally, when pixel values of image data are the same, the amount of ink discharged from each recording head is the same, but, in actual use, the amount of ink discharged from each recording head has a slight difference between the recording heads due to individual differences among the recording heads and changes in the surrounding environment at that time. The slight difference between the recording heads causes a density difference between an image formed by the upstream recording head and an image formed by the downstream recording head.

From such a viewpoint, in the image forming apparatus according to the conventional art, at the overlapping portion, the ink is discharged from both the nozzle of the upstream recording head and the nozzle of the downstream recording head, and further, the ratio of the ink discharged from the nozzle of the upstream recording head and the ink discharged from the nozzle of the downstream recording head is changed stepwise from a center side toward an end portion side of the nozzle row, so that a sudden density difference between the image formed by the upstream recording head and the image formed by the downstream recording head is prevented from occurring. That is, each dot of the image formed by the nozzles at the overlapping portion of the recording heads is formed such that the ink discharged from the nozzle of the downstream recording head overlaps the ink discharged from the nozzle of the upstream recording head.

However, in this type of image forming apparatus, due to a manufacturing error, collision with another object in use, a difference in use environment between the time of manufacturing and the time of use, or the like, the positional relationship between the recording heads in the line head may slightly deviate in the width direction (that is, nozzle arrangement direction) from the designed positional relationship. In such a case, the total amount of ink discharged to the overlapping portion of the recording heads (that is, the total amount of ink discharged from the nozzle of the upstream recording head and ink discharged from the nozzle of the downstream recording head) deviates from the assumption, and in the image formed by the nozzles of the overlapping portion of the recording heads, a black streak may occur due to excessively large discharge dots, or a white streak may occur due to excessively small discharge dots (hereinafter, collectively referred to as "streaky noise").

Note that Fig. 1 illustrates a state in which the positional relationship between recording heads in a line head is deviated to the side of being close to each other in the width direction from the designed positional relationship, and a black streak occurs in an image region formed by the nozzles of the overlapping portion of the recording heads. In more detail, Fig. 1 illustrates a state where the ink discharge amount from each nozzle of the recording head is set on the assumption that only a dot Pu1 formed by the nozzle of the upstream recording head and a dot Pd1 formed by the nozzle of the downstream recording head overlap, but due to the positional deviation, the dot Pu1 formed by the nozzle of the upstream recording head, a dot Pd2 formed by the nozzle of the downstream recording head, and a dot Pu2 formed by the nozzle of the upstream recording head and the dot Pd1 formed by the nozzle of the downstream recording head overlap each other, and the dots become excessively large at the overlapping portions. Patent Literature 2 discloses an image recording device comprising a first and second recording heads formed of recording elements cyclically arrayed, which are continuously arrayed with an overlapped region; image data distributing means for distributing image data to these recording heads, and image data distribution region variation means for setting an image data distribution region where the image data of each pixel is distributed to both the recording heads by the image data distributing means. Patent Literature 3 relates to an ink discharge operation adjustment method and an inkjet recording device, comprising a recording step, in which ink droplets are discharged from a nozzle onto a recording medium by an ink discharge unit, causing a gray scale image and a beta image to be recorded; a fixing step of initiating the curing and fixing of the ink deposited on the recording medium, and a first reading result acquisition step of acquiring the result of a reading performed by a reading means on an unrecorded area of the recording medium.

### Summary

The present invention has been made in view of the problem described above, and an object is to provide an image forming apparatus, a control method for the image forming apparatus, and a control program for the image forming apparatus that enable appropriate adjustment of density of an image formed by nozzles of an overlapping portion of recording heads.

To achieve the abovementioned object, the present invention is defined in the appended claims.

### Brief Description of the Drawings

The advantages and features provided by one or more embodiments of the invention will become more fully understood from the detailed description given hereinbelow and the appended drawings which are given by way of illustration only, and thus are not intended as a definition of the limits of the present invention:
Fig. 1 is a diagram illustrating an example of an arrangement aspect of two adjacent recording heads arranged in a line head and an example of a discharge aspect of ink discharged from each of the two adjacent recording heads;
Fig. 2 is a diagram illustrating a schematic configuration of an image forming apparatus according to an embodiment of the present invention;
Fig. 3 is a schematic diagram illustrating a configuration of a head unit according to an embodiment of the present invention;
Fig. 4 is a block diagram illustrating a main functional configuration of the image forming apparatus according to an embodiment of the present invention;
Figs. 5A to 5C are diagrams describing an ink landing aspect (Fig. 5B) when the density is corrected by a discharge amount Down of a nozzle of an overlapping portion of a downstream recording head and an ink landing aspect (Fig. 5C) when the density is corrected by a discharge amount Down of a nozzle of an overlapping portion of an upstream recording head in a state where a black streak occurs in an image formed on a recording medium (Fig. 5A);
Fig. 6 is a diagram illustrating functional blocks of a control portion according to an embodiment of the present invention;
Figs. 7A to 7C are diagrams describing an example of a method of correcting the ink discharge amount of the nozzle of the overlapping portion by a discharge correction amount setting portion according to an embodiment of the present invention;
Fig. 8 is a flowchart describing an example of discharge correction amount calculation processing in a control portion (here, processing of test print execution portion and discharge correction amount setting portion) according to an embodiment of the present invention; and
Fig. 9 is a flowchart describing an example of processing of determining the discharge amount of ink from each nozzle of a recording head at the time of executing actual printing in a control portion (here, processing of driving condition determination portion) according to an embodiment of the present invention.

### Detailed Description of Embodiments

Hereinafter, one or more embodiments of the present invention will be described with reference to the drawings. However, the scope of the invention is not limited to the disclosed embodiments. Note that, in the present specification and the drawings, components having substantially the same function are denoted by the same reference numerals, and redundant description is omitted.

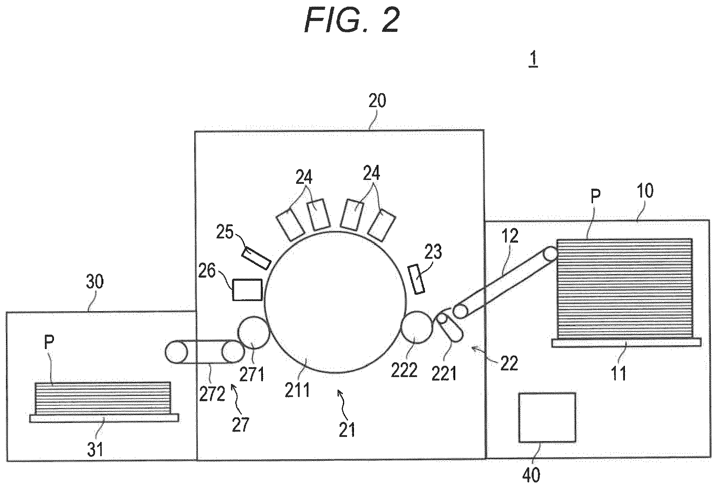

Hereinafter, an example of a configuration of an image forming apparatus (hereinafter, referred to as an "image forming apparatus 1") according to an embodiment of the present invention will be described with reference to Figs. 2 to 4.

Fig. 2 is a diagram illustrating a schematic configuration of the image forming apparatus 1.

The image forming apparatus 1 is an inkjet type image forming apparatus that forms an image by discharging (ejecting) ink from a nozzle formed in a recording head and landing the ink on a recording medium P such as paper. The image forming apparatus 1 includes a sheet feeding portion 10, an image forming portion 20, a sheet ejection portion 30, and a control portion 40.

Under the control of the control portion 40, the image forming apparatus 1 conveys the recording medium P stored in the sheet feeding portion 10 to the image forming portion 20, discharges ink on the recording medium P in the image forming portion 20 to record an image, and conveys the recording medium P on which the image is recorded to the sheet ejection portion 30.

In detail, the image forming apparatus 1 records a color image on the recording medium P by outputting and superimposing four colors: yellow (Y), magenta (M), cyan (C), and black (K) on the recording medium P at a predetermined number of recording gradations. The image forming apparatus 1 is configured to be capable of storing a color image on the recording medium P in the high-speed printing mode described above. Note that, hereinafter, ink colors of yellow (Y), magenta (M), cyan (C), and black (K) will be abbreviated respectively as Y, M, C, and K.

As the recording medium P, in addition to paper such as plain paper or coated paper, various media on which the ink landed on the surface can be fixed, such as of fabric or sheet-shaped resin, can be used.

The sheet feeding portion 10 includes a sheet feeding tray 11 that stores the recording medium P, and a medium supply portion 12 that conveys and supplies the recording medium P from the sheet feeding tray 11 to the image forming portion 20. The medium supply portion 12 includes an annular belt whose inner side is supported by two rollers, and conveys the recording medium P from the sheet feeding tray 11 to the image forming portion 20 by rotating the rollers in a state where the recording medium P is placed on the belt.

The image forming portion 20 includes a conveyance portion 21, a handover unit 22, a heating portion 23, head units 24, a fixing portion 25, an image reading portion 26, and a delivery portion 27.

The conveyance portion 21 holds the recording medium P placed on the conveyance surface of a conveyance drum 211 having a cylindrical shape, and conveys the recording medium P on the conveyance drum 211 in the conveyance direction along the conveyance surface by rotating and moving the conveyance drum 211 about a rotation axis (cylindrical axis) extending in a direction orthogonal to the conveyance direction (that is, in the width direction of the recording medium).

The conveyance drum 211 includes a claw portion and an air intake portion, which are not illustrated, for holding the recording medium P on the conveyance surface. An end portion of the recording medium P is pressed by the claw portion, and is sucked to the conveyance surface by the air intake portion so as to be held on the conveyance surface.

The handover unit 22 is provided at a position between the medium supply portion 12 of the sheet feeding portion 10 and the conveyance portion 21, holds and picks up one end of the recording medium P conveyed from the medium supply portion 12 with a swing arm portion 221, and hands over the recording medium P to the conveyance portion 21 via a handover drum 222.

The heating portion 23 is provided between the disposition position of the handover drum 222 and the disposition position of the head units 24, and heats the recording medium P so that the recording medium P conveyed by the conveyance portion 21 has a temperature within a predetermined temperature range. The heating portion 23 includes, for example, an infrared heater or the like, and energizes the infrared heater on the basis of a control signal supplied from the control portion 40 to cause the infrared heater to generate heat.

The head units 24 record an image by discharging ink onto the recording medium P through a nozzle opening provided in an ink discharge surface facing the conveyance surface of the conveyance drum 211 at an appropriate timing according to the rotation of the conveyance drum 211 on which the recording medium P is held.

In the head units 24, the ink discharge surface and the conveyance surface are disposed to be spaced apart a predetermined distance. In the image forming apparatus 1 of the present embodiment, four head units 24 corresponding to the inks of four colors: Y, M, C, and K are arranged at predetermined intervals in the order of Y, M, C, and K colors from the upstream side in the conveyance direction of the recording medium P. Note that, since the four head units 24 according to the present embodiment have similar configurations, they are collectively referred to as the "head unit 24" below.

The head unit 24 is used in position at the time of recording an image, and sequentially discharges the ink at predetermined intervals (conveyance direction intervals) at different positions in the conveyance direction according to the conveyance of the recording medium P, thereby recording an image by a single-pass method.

Fig. 3 is a schematic diagram illustrating a configuration of the head unit 24. Fig. 3 illustrates a surface of the head unit 24 facing an outer peripheral surface of the conveyance drum 211.

Here, the head unit 24 includes four recording heads 240a to 240d attached to an attachment member 244. In each of the four recording heads 240a to 240d, a plurality of image forming elements each including a pressure chamber (not illustrated) for storing ink, a piezoelectric element (not illustrated) provided on a wall surface of the pressure chamber, and a nozzle 243 communicating with the pressure chamber is provided in a line along the width direction of the recording medium P. In this image forming element, when a drive signal for deforming and operating the piezoelectric element is input, the pressure chamber is deformed by the deformation of the piezoelectric element, the pressure in the pressure chamber changes, and the ink is discharged from the nozzle 243 communicating with the pressure chamber. Thus, in each of the four recording heads 240a to 240d, ink droplets of the liquid amount corresponding to the pixel value of the image data are discharged from the nozzle 243 toward the recording medium P, and an image is formed on the recording medium P carried on the conveyance drum 211.

The four recording heads 240a to 240d are disposed in a staggered manner such that disposition ranges in the width direction of the recording medium P (nozzle row direction of recording heads 240) are connected without discontinuity. In addition, the four recording heads 240a to 240d are arranged such that, regarding a pair of recording heads 240 adjacent to each other, among the plurality of nozzles 243 (nozzle group) provided in each, the disposition ranges of a nozzle of one recording head 240 in the vicinity of an end portion on one side and a nozzle of the other recording head 240 in the vicinity of an end portion on the other side overlap each other in the nozzle row direction. That is, an overlapping portion R in which the discharge target regions overlap each other between adjacent other recording heads 240 is set at the end portion of the nozzle row of each recording head 240.

Note that, hereinafter, among the plurality of recording heads 240a to 240d provided in the head unit 24, the recording heads 240a and 240c arranged on the upstream side in the conveyance direction are referred to as "upstream recording heads 240", and the recording heads 240b and 240d arranged on the downstream side in the conveyance direction are referred to as "downstream recording heads 240". In addition, when they are not distinguished, they are simply referred to as the "recording head 240". In addition, a nozzle corresponding to the overlapping portion R within the nozzle row formed in each recording head 240 is also referred to as an "overlapping portion nozzle 243" or an "end portion nozzle 243", and a nozzle not corresponding to the overlapping portion R within the nozzle row formed in each recording head 240 is also referred to as a "central nozzle 243".

The disposition range of the nozzles 243 included in the head unit 24 in the width direction of the recording medium P covers the entire width in the width direction of the recording medium P in a region where an image is formed in the recording medium P conveyed by the conveyance drum 211, and the head unit 24 is used by being fixed to the rotation shaft of the conveyance drum 211 at the time of forming the image. That is, the head unit 24 constitutes a line head capable of discharging the ink over an image formable width in the width direction of the recording medium P with respect to the recording medium P.

The recording head 240 includes an ink heating portion (not illustrated) that heats the ink stored in the recording head 240, and discharges the heated and sol-like ink. When the sol-like ink is discharged onto the recording medium P, the ink is landed on the recording medium P and then naturally cooled, so that the ink quickly becomes gel-like and is solidified on the recording medium P.

Note that as the ink discharged from the nozzles 243 of the recording heads 240, for example, an ultraviolet-curable hot-melt ink composition can be used.

The fixing portion 25 includes an energy ray emission portion disposed over the entire width in the width direction of the recording medium P in the conveyance portion 21, and irradiates the recording medium P placed on the conveyance portion 21 with an energy ray such as an ultraviolet ray from the energy ray emission portion to cure and fix the ink discharged on the recording medium P. The energy ray emission portion of the fixing portion 25 is disposed to face the conveyance surface between the disposition positions of the head units 24 and the disposition position of a handover drum 271 of the delivery portion 27 in the conveyance direction.

The image reading portion 26 is disposed facing the drum surface of the conveyance drum 211 on the downstream side in the conveyance direction of the position for fixing the image by the fixing portion 25. The image reading portion 26 reads the density of an image including a test image for density measurement, which will be described below, formed on the recording medium P conveyed by the conveyance drum 211. The image reading portion 26 sends data of the read image to the control portion 40 as imaging data.

The image reading portion 26 includes, for example, a combination of a light source that irradiates the recording medium P conveyed by the conveyance drum 211 with light and a sensor portion that detects the intensity of reflected light from the recording medium P on the basis of the light emitted from the light source to the recording medium P. The sensor portion is, for example, a line sensor in which a plurality of detection elements (pixels) is arranged in the width direction of the recording medium P. The sensor portion includes, for example, a charge coupled device (CCD) type imaging element, a complementary metal oxide semiconductor (CMOS) type imaging element, or the like, and can acquire a formed image on the recording medium P for each of a plurality of wavelength components, for example, at three wavelengths of red (R), green (G), and blue (B).

The delivery portion 27 includes a belt loop 272 having an annular belt whose inner side is supported by two rollers, and the handover drum 271 having a cylindrical shape that hands over the recording medium P from the conveyance portion 21 to the belt loop 272, and conveys the recording medium P handed over from the conveyance portion 21 onto the belt loop 272 by the handover drum 271 with the belt loop 272 and sends the recording medium P to the sheet ejection portion 30.

The sheet ejection portion 30 includes a sheet ejection tray 31 having a plate shape on which the recording medium P sent from the image forming portion 20 by the delivery portion 27 is placed. Then, the sheet ejection portion 30 places the recording medium P on which an image is formed on the sheet ejection tray 31.

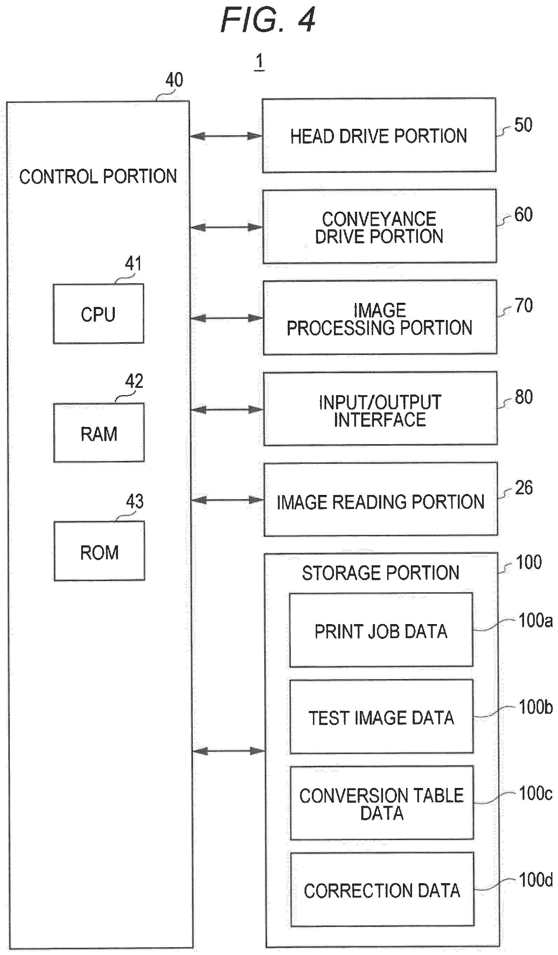

Fig. 4 is a block diagram illustrating a main functional configuration of the image forming apparatus 1. The image forming apparatus 1 includes the control portion 40, a head drive portion 50, a conveyance drive portion 60, an image processing portion 70, an input/output interface 80, and a storage portion 100.

The control portion 40 includes a central processing unit (CPU) 41, random access memory (RAM) 42, and read only memory (ROM) 43, and integrally controls the entire operation of the image forming apparatus 1. The control portion 40 receives image data transmitted from an external apparatus (for example, a personal computer) connected to a communication network such as a local area network (LAN) or a wide area network (WAN) via the input/output interface 80, and causes the head drive portion 50, the conveyance drive portion 60, the image processing portion 70, and the like to perform an operation of forming an image on the recording medium P on the basis of the image data (input image data).

The CPU 41 reads various control programs and setting data stored in the ROM 43, causes the RAM 42 to store them, and execute the programs to perform various arithmetic processing.

The RAM 42 provides a working memory space for the CPU 41, and stores temporary data. The RAM 42 may include, for example, nonvolatile memory.

The ROM 43 stores various control programs executed by the CPU 41, setting data, and the like. Note that, instead of the ROM 43, rewritable nonvolatile memory such as electrically erasable programmable read only memory (EEPROM) or flash memory may be used.

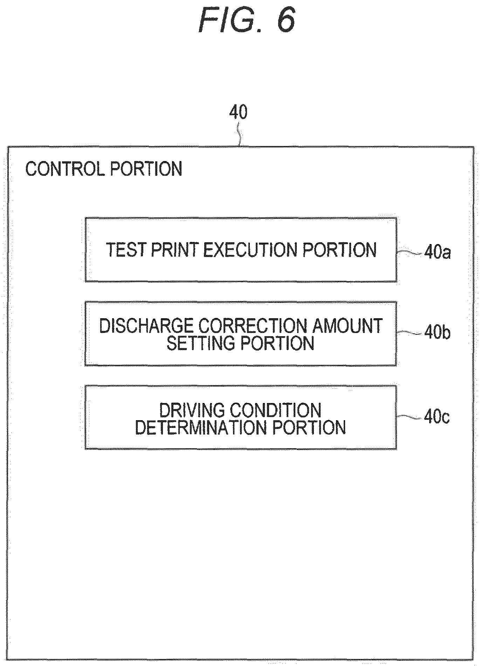

Each function (test print execution portion 40a, discharge correction amount setting portion 40b, and driving condition determination portion 40c (see Fig. 6)) to be described below of the control portion 40 is achieved, for example, by the CPU 41 referring to the control program and various data stored in the ROM 43, the RAM 42, the storage portion 100, and the like. However, some or all of the functions may be achieved by processing by a digital signal processor (DSP) or a dedicated hardware circuit (for example, ASIC or FPGA) instead of or in addition to the processing by the CPU 41.

The head drive portion 50 supplies a drive signal corresponding to the image data to the image forming element of the head unit 24 at an appropriate timing on the basis of control by the control portion 40, and causes the nozzles of the head unit 24 to discharge the ink of an amount corresponding to the pixel value of the image data.

The head drive portion 50 receives image data subjected to image processing by the control portion 40, and forms a predetermined image on the recording medium P on the basis of the image data. Specifically, under the control of the control portion 40, the head drive portion 50 applies, to the head unit 24, a drive voltage (which means a piezoelectric drive voltage for driving the image forming element. The same applies hereinafter) according to the pixel value of the image data. Thus, the ink of a liquid amount corresponding to the pixel value of the image data is discharged (ejected) from the nozzle 243 of the recording head 240, and is landed at a predetermined position on the recording medium P to form an image.

The liquid amount of the ink discharged from the nozzle 243 of the recording head 240 is basically adjusted on the basis of the voltage level of the drive voltage applied from the head drive portion 50 to the individual image forming element of the recording head 240, but can also be adjusted by correcting the discharge gradation of the individual nozzle 243 of the recording head 240 (the number of times of discharge for discharging per pixel region (multi-drop method)).

The conveyance drive portion 60 supplies a drive signal to a conveyance drum motor provided in the conveyance drum 211 on the basis of the control signal supplied from the control portion 40, and rotates the conveyance drum 211 at a predetermined speed and timing. In addition, the conveyance drive portion 60 supplies a drive signal to a motor for operating the medium supply portion 12, the handover unit 22, and the delivery portion 27 on the basis of the control signal supplied from the control portion 40, and causes the recording medium P to be supplied to the conveyance portion 21 and discharged from the conveyance portion 21.

The image processing portion 70 performs predetermined image processing on the image data stored in the storage portion 100, and causes the storage portion 100 to store the obtained image data. This image processing includes color conversion processing, gradation correction processing, pseudo halftone processing, and the like in addition to correction processing of correcting image data by applying a correction table or the like, which is not illustrated, to the image data.

The input/output interface 80 is connected to an input/output interface of an external apparatus (for example, a personal computer), and mediates transmission and reception of data between the control portion 40 and the external apparatus. The input/output interface 80 includes, for example, any one of various serial interfaces and various parallel interfaces, or a combination thereof.

The storage portion 100 stores print job data 100a, test image data 100b, conversion table data 100c, correction data 100d, and the like. As the storage portion 100, for example, a hard disk drive (HDD), dynamic random access memory (DRAM), or the like is used.

The print job data 100a is data input from the external apparatus via the input/output interface 80, and includes, for example, job identification information, image data to be printed, setting data related to image recording, status data related to a status (for example, the number of sheets on which printing is completed) during execution of a print job, and the like.

The test image data 100b is image data of a test image for density measurement. The test image data 100b is referred to at the time of test printing, for example, and is set so that a predetermined amount of ink is discharged from all the nozzles 243 of the four recording heads 240a to 240d, and for example, a solid image with a predetermined gradation is used.

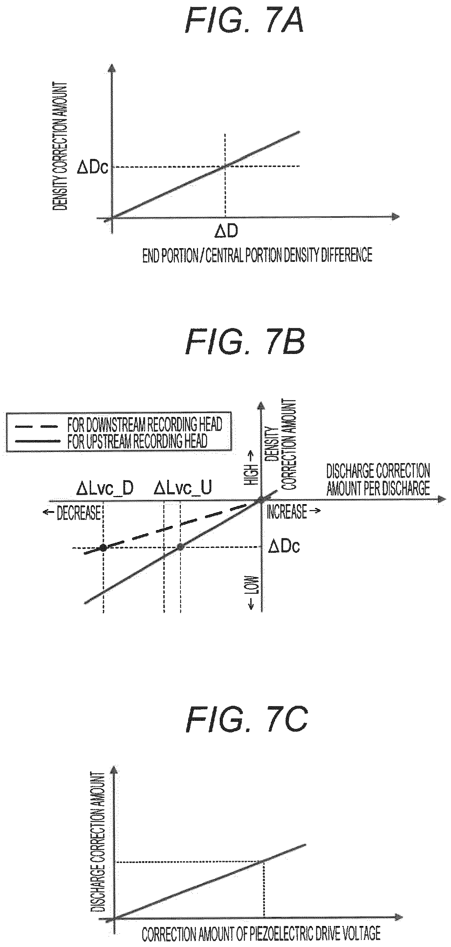

The conversion table data 100c is table data for the control portion 40 (discharge correction amount setting portion 41) to be described below to calculate the discharge correction amount of the ink of the nozzle 243 of the overlapping portion R from the read information of the test image on the recording medium P formed by the test printing (see Figs. 7A and 7B to be described below).

The correction data 100d is data related to the discharge correction amount of the ink of the nozzle 243 of the overlapping portion R calculated using the conversion table data 100c. The correction data 100d separately stores, for example, data to be applied to each of the plurality of recording heads 240a to 240d. The correction data 100d is prepared to correct the ink discharge amount of each of the plurality of recording heads 240a to 240d determined by the control portion 40 on the basis of the pixel value of the image data to be printed at the time of performing the actual printing. That is, at the time of the actual printing, the discharge amount of the ink from the nozzle of the overlapping portion R of the plurality of recording heads 240a to 240d is adjusted to the discharge amount in which the streaky noise does not occur in the image by the correction data 100d.

### [Regarding Detailed Configuration of Control Portion]

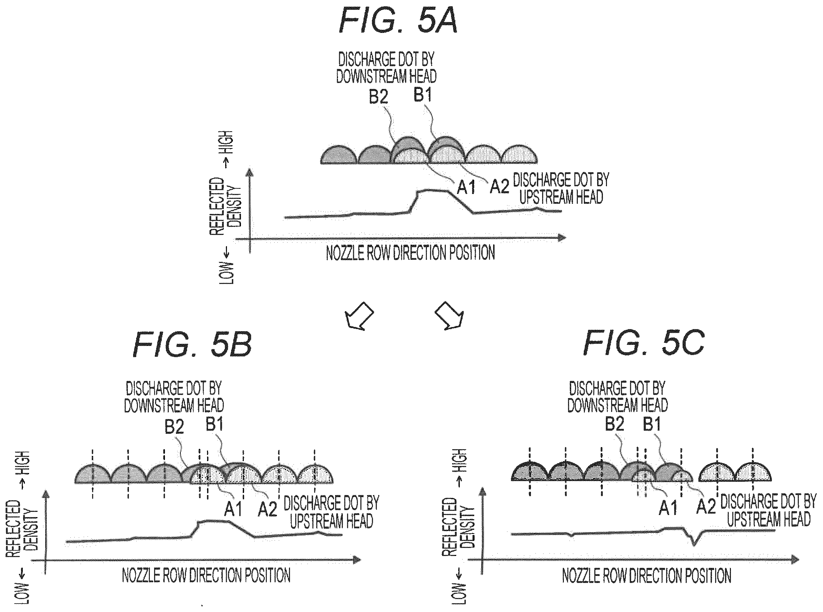

Hereinafter, a detailed configuration of the control portion 40 according to the present embodiment will be described with reference to Figs. 5A to **9****.**

First, a basic concept of density correction processing performed by the image forming apparatus 1 according to the present embodiment will be described.

In order to suppress the above-described streaky noise caused by the positional deviation of the recording heads 240, the applicant of the present application has proposed a method of forming a test image on the recording medium P by test printing and performing feedback from the density of the image formed on the recording medium P to the discharge amount of the nozzles 243 in JP 2008-294609 A. Thus, also when the positional relationship between the recording heads 240 in the head unit deviates in the width direction (that is, the arrangement direction of the nozzles) from the designed positional relationship, the density of the image formed in the overlapping portion R can be adjusted.

However, as a result of intensive studies by the inventors of the present application, by the method described in JP 2008-294609 A, there is a difference in the density change amount depending on whether the discharge amount of the upstream recording head 240 or the downstream recording head 240 is increased or decreased, and it has been found that the density correction cannot be appropriately performed by the method of performing feedback to the discharge amount of the nozzle of the upstream recording head 240 or the downstream recording head 240 without considering such a viewpoint. In addition, JP 2008-294609 A also discloses a method of correcting the density of the overlapping portion R by changing the "number of non-discharge pixels", but it has been found that when the density correction is performed by such a method, discomfort due to roughness is conspicuous.

Note that such a problem particularly noticeably appears when a gel-like ink the spread of ink of which is small when the ink discharged from the nozzle lands is used.

Figs. 5A to 5C are diagrams describing an ink landing aspect (Fig. 5B) when the density is corrected by the discharge amount Down of the nozzle 243 of the overlapping portion R of the downstream recording head 240 and an ink landing aspect (Fig. 5C) when the density is corrected by the discharge amount Down of the nozzle 243 of the overlapping portion R of the upstream recording head 240 in a state where a black streak occurs in an image formed on the recording medium P (Fig. 5A).

Note that Fig. 5A illustrates a state where the ink discharge amount from each nozzle 243 of the recording head 240 is set on the assumption that only a dot A1 formed by the nozzle 243 of the upstream recording head 240 and a dot B1 formed by the nozzle 243 of the downstream recording head 240 overlap, but due to the positional deviation, dots A1 and A2 formed by the nozzle 243 of the upstream recording head 240 and dots B1 and B2 formed by the nozzle 243 of the downstream recording head 240 are in a state of overlapping each other, and the dots become excessively large at the overlapping portions R.

In the correction method of JP 2008-294609 A proposed by the applicants of the present application, a test image is printed on the recording medium P, and the density of an image formed in the overlapping portion R (that is, the end portion nozzle 243 of the recording head 240) on the recording medium P and the density of an image formed by a nozzle (that is, the central nozzle 243 of the recording head 240) of a portion other than the overlapping portion R on the recording medium P are detected. Then, a state in which a black streak occurs or a state in which a white streak occurs in an image formed on the recording medium P is detected on the basis of a difference value between these densities. Then, in the correction method of JP 2008-294609 A, in a case where it is detected that a black streak occurs in an image region formed on the recording medium P, it is attempted to eliminate the black streak in the image by decreasing the discharge amount per pixel by the nozzle 243 of the overlapping portion R, and in addition, in a case where it is detected that a white streak occurs in the image formed on the recording medium P, it is attempted to eliminate the white streak in the image by increasing the discharge amount per pixel by the nozzle of the overlapping portion R.

However, in the correction method of JP 2008-294609 A, the correction target is randomly determined without considering whether the nozzle 243 to be corrected for the ink discharge amount exists in the upstream recording head 240 in the head unit 24 or in the downstream recording head 240 in the head unit 24.

However, in practice, a difference occurs in the density change amount between the case where the density is corrected by the discharge amount Down (discharge amount Up in case of white streak) of the nozzle 243 of the overlapping portion R of the downstream recording head 240 and the case where the density is corrected by the discharge amount Down (discharge amount Up in case of white streak) of the nozzle 243 of the overlapping portion R of the upstream recording head 240. Therefore, in the correction method of JP 2008-294609 A, appropriate density correction is not performed, and streaky noise remains in the image in some cases.

Here, as illustrated in Fig. 5A, a state in which a black streak occurs in an image formed on the recording medium P is considered. Note that, in this case, in order to eliminate the black streak, it is necessary to perform correction to reduce the discharge amount of the ink discharged from the nozzle 243 of the overlapping portion R in order to reduce the density of the image formed by the nozzle 243 of the overlapping portion R.

First, when the ink is discharged from the upstream recording head 240, the ink lands on a flat recording medium P, and forms dots A1, A2, and the like at pixel positions of the recording medium P. Next, when the ink is discharged from the downstream recording head 240, the ink lands so as to overlap the previously formed dots A1 and A2 in the overlapping portion R, and forms dots B1 and B2 spreading around the dots A1 and A2 to fill the paper surface.

At this time, when the density is corrected only by the discharge amount Down of the nozzle 243 of the overlapping portion R of the downstream recording head 240, as illustrated in Fig. 5B, since there is no change in the sizes of the dots A1 and A2 formed by the ink discharged from the upstream recording head 240, the dots B1 and B2 of the ink discharged from the downstream recording head 240 are largely spread even after the correction, and the dot diameter of the combined dots of the dot A2 and the dot B1 (and the combined dot of the dot A1 and the dot B2) remains large. Since the density of the image typically depends on the dot diameter, in this case, the density change amount of the image formed by the nozzle 243 of the overlapping portion R is smaller than the case where the density is corrected by the discharge amount Down of the nozzle 243 of the overlapping portion R of the upstream recording head 240. Therefore, a black streak may remain in the image even after the correction. In other words, in order to reduce the density of the image, it is necessary to reduce the sizes of the dots A1 and A2 formed by the ink discharged from the upstream recording head 240 to some extent or less.

On the other hand, when the density is corrected only by the discharge amount Down of the nozzle 243 of the overlapping portion R of the upstream recording head 240, there is a case where the dots A1 and A2 formed by the ink discharged from the upstream recording head 240 are in a state of being isolated as illustrated in Fig. 5C. In this case, even when the ink discharged from the downstream recording head 240 overlaps the dots A1 and A2, the dot diameter of the combined dot of the dot A2 and the dot B1 (or the combined dot of the dot A1 and the dot B2) becomes too small, or the combined dot is disposed at a biased position in the pixel region of the recording medium P, and as a result, a white streak may occur in the image.

In other words, this means that the effect on the image by the discharge amount Down of the nozzle 243 of the overlapping portion R of the downstream recording head 240 and the effect on the image by the discharge amount Down of the nozzle 243 of the overlapping portion R of the upstream recording head 240 are different, and the density of the image cannot be appropriately adjusted even when only one of them is corrected. Further, in a case where the discharge amount Down of the nozzle of the overlapping portion R of the downstream recording head 240 and the discharge amount Down of the nozzle of the overlapping portion R of the upstream recording head 240 are the same amount (that is, the correction amounts are the same), depending on the magnitude of the correction amount, a state in which the dots A1 and A2 formed by the ink discharged from the upstream recording head 240 are isolated occurs, or the dot diameter of the combined dot of the dot A2 and the dot B1 (and the combined dot of the dot A1 and the dot B2) remains large, and there is a possibility that the density of the image cannot be set to a desired value.

In the invention of the present application, from such a viewpoint, when a black streak occurs in an image formed on the recording medium P, both the discharge amount Down of the nozzle 243 of the overlapping portion R of the downstream recording head 240 and the discharge amount Down of the nozzle 243 of the overlapping portion R of the upstream recording head 240 are performed to correct the image density. Then, at this time, the correction amount (here, the correction in the Down direction) of the discharge amount of the nozzle 243 of the overlapping portion R of the downstream recording head 240 is set to be larger than the correction amount (here, the correction in the Down direction) of the discharge amount of the nozzle of the overlapping portion R of the upstream recording head 240.

This makes it possible to adjust the dot diameter of the discharge dot to a suitable size while avoiding the isolated state of the discharge dot immediately under the overlapping portion R. That is, thus, the occurrence of a black streak can be more unfailingly suppressed.

Note that, here, a density correction method in a case where a black streak occurs in an image formed on the recording medium P in the image forming apparatus 1 according to the present embodiment has been described, but a similar concept can be applied to a density correction method in a case where a white streak occurs in an image formed on the recording medium P.

That is, when a white streak occurs in an image formed on the recording medium P, in order to eliminate the white streak, it is necessary to perform correction to increase the discharge amount of the ink discharged from the nozzle 243 of the overlapping portion R in order to increase the density of the image formed by the nozzle 243 of the overlapping portion R.

At this time, when the dots A1 and A2 formed by the ink discharged from the upstream recording head 240 remain in an isolated state, or when the size of the dots A1 and A2 becomes too large, the density of the image cannot be appropriately adjusted. Then, at this time, in a case where the discharge amount Up of the nozzle of the overlapping portion R of the downstream recording head and the discharge amount Up of the nozzle of the overlapping portion R of the upstream recording head 240 are the same amount (that is, the correction amounts are the same), depending on the magnitude of the correction amount, the dots A1 and A2 formed by the ink discharged from the upstream recording head remain in an isolated state, or the dot diameter of the combined dot of the dot A2 and the dot B1 (and the combined dot of the dot A1 and the dot B2) becomes excessively large, and there is a possibility that the density of the image cannot be set to a desired value.

In the invention of the present application, from such a viewpoint, when a white streak occurs in an image formed on the recording medium P, both the discharge amount Up of the nozzle 243 of the overlapping portion R of the downstream recording head 240 and the discharge amount Up of the nozzle of the overlapping portion R of the upstream recording head 240 are performed to correct the image density. Then, at this time, the correction amount (here, the correction in the Up direction) of the discharge amount of the nozzle 243 of the overlapping portion R of the downstream recording head 240 is set to be smaller than the correction amount (here, the correction in the Up direction) of the discharge amount of the nozzle 243 of the overlapping portion R of the upstream recording head 240.

Fig. 6 is a diagram illustrating an example of functional blocks of the control portion 40.

The control portion 40 includes the test print execution portion 40a, the discharge correction amount setting portion 40b, and the driving condition determination portion 40c.

Here, the test print execution portion 40a is a functional unit that forms a test image for density detection on the recording medium P using the head unit 24 and causes the image reading portion 26 to read density information of the test image formed on the recording medium P.

The discharge correction amount setting portion 40b is a functional unit that calculates, at the time of test printing, for each of the plurality of recording heads 240 (here, four recording heads 240a to 240d), a difference value between the density of the image formed using the end portion nozzle 243 corresponding to the overlapping portion R in the nozzle row in the recording head 240 and the density of the image formed using the central nozzle 243 not corresponding to the overlapping portion R in the nozzle row in the recording head 240 from the density information of the read test image, and sets the discharge correction amount per discharge at the time of discharging the ink from the end portion nozzle 243 at the time of actual printing on the basis of the difference value.

The discharge correction amount setting portion 40b is configured to convert the difference value into the discharge correction amount with reference to a predetermined conversion table (Fig. 7B described below). Here, the predetermined conversion table includes a first conversion table applied to the upstream recording head 240 (hereinafter, referred to as a "first conversion table") and a second conversion table applied to the downstream recording head 240 (hereinafter, referred to as a "second conversion table"), and the two different tables are prepared. Then, the discharge correction amount setting portion 40b is configured to refer to the first conversion table when calculating the discharge correction amount to be applied to the end portion nozzle 243 of the upstream recording head 240 and refer to the second conversion table when calculating the discharge correction amount to be applied to the end portion nozzle 243 of the downstream recording head 240.

At the time of executing the actual printing, the driving condition determination portion 40c calculates the discharge amount of ink by each nozzle 243 of the nozzle row of each of the plurality of recording heads 240 (here, four recording heads 240a to 240d) on the basis of the pixel value of the image data to be printed, and determines the driving condition (for example, a piezoelectric drive voltage applied to individual image forming element) of each of the plurality of recording heads 240.

At this time, the driving condition determination portion 40c corrects the driving condition (for example, a piezoelectric drive voltage applied to individual image forming element) of each of the plurality of recording heads 240 on the basis of the discharge correction amount set for each of the plurality of recording heads 240, and adjusts the discharge amount of the ink by the end portion nozzle 243 of each of the plurality of recording heads 240.

Note that the driving condition determination portion 40c determines the driving condition of each recording head 240 such that, at the overlapping portion, for example, both the nozzle 243 of the upstream recording head 240 and the nozzle 243 of the downstream recording head 240 are caused to discharge the ink and each dot of the image formed by the nozzles 243 of the overlapping portion is formed by overlapping the ink discharged from the nozzle 243 of the downstream recording head 240 on the ink discharged from the nozzle 243 of the upstream recording head 240.

Figs. 7A to 7C are diagrams describing an example of a method of correcting the ink discharge amount of the nozzle 243 of the overlapping portion R by the discharge correction amount setting portion 40b. Note that Figs. 7A, 7B, and 7C are examples of table data referred to by the discharge correction amount setting portion 40b at the time of correction. In Figs. 7A, 7B, and 7C, for convenience of description, only table data referred to in a case where the density of the image region formed by the end portion nozzle 243 of the recording head 240 is higher than the density of the image region formed by the central nozzle 243 of the recording head 240 (that is, a state where a black streak occurs in the image) is illustrated.

Fig. 7A is a diagram illustrating an example of table data (hereinafter, referred to as "density correction value calculation table data") for calculating a density correction value ΔDc of the end portion nozzle 243 from a difference value ΔD (hereinafter referred to as "central portion/end portion density difference ΔD") between the density of an image formed using the end portion nozzle (that is, the nozzle corresponding to the overlapping portion R in the nozzle row of the recording head 240) 243 of the recording head 240 and the density of an image formed using the central nozzle (that is, the nozzle corresponding to a portion other than the overlapping portion R in the nozzle row of the recording head 240) 243 of the recording head 240.

Note that, in the present embodiment, from the viewpoint of fine adjustment, the central portion/end portion density difference ΔD and the density correction value ΔDc are set to different values, but the central portion/end portion density difference ΔD and the density correction value ΔDc may be set to the same value. In this case, the density correction value calculation table data is unnecessary.

Fig. 7B is a diagram illustrating an example of table data (hereinafter, referred to as "discharge correction amount calculation table data") for calculating discharge correction amount ΔLvc_U (discharge correction amount applied to the upstream recording head 240) and ΔLvc_D (discharge correction amount applied to the downstream recording head 240) per discharge by the end portion nozzle 243 from the density correction value ΔDc of the end portion nozzle 243.

In the discharge correction amount calculation table data, for example, when the density correction value ΔDc is on the positive side (that is, when the density of the image formed using the end portion nozzle 243 is higher than the density of the image formed using the central nozzle 243), the discharge correction amounts ΔLvc_U and ΔLvc_D are set in the direction of decreasing the discharge amount of ink by the end portion nozzle 243. In addition, when the density correction value ΔDc is on the negative side (that is, when the density of the image formed using the end portion nozzle 243 is lower than the density of the image formed using the central nozzle 243), the discharge correction amounts ΔLvc_U and ΔLvc_D are set in the direction of increasing the discharge amount of ink by the end portion nozzle 243.

In addition, as the discharge correction amount calculation table data, different table data is prepared: table data (first conversion table) (solid line in Fig. 7B) applied to the upstream recording head 240 and table data (second conversion table) (dotted line in Fig. 7B) applied to the downstream recording head 240. More specifically, in the region where a black streak is eliminated in the image, the discharge correction amount (that is, the discharge correction amount per unit amount of the central portion/end portion density difference ΔD) ΔLvc_U per unit amount of the density correction value ΔDc of the first conversion table is set to be smaller than the discharge correction amount (that is, the discharge correction amount per unit amount of the central portion/end portion density difference ΔD) ΔLvc_D per unit amount of the density correction value ΔDc of the second conversion table. In addition, in the region where a white streak is eliminated in the image, the discharge correction amount (that is, the discharge correction amount per unit amount of the central portion/end portion density difference ΔD) ΔLvc_U per unit amount of the density correction value ΔDc of the first conversion table is set to be larger than the discharge correction amount (that is, the discharge correction amount per unit amount of the central portion/end portion density difference ΔD) ΔLvc_D per unit amount of the density correction value ΔDc of the second conversion table.

Note that a function (that is, graph characteristics) set in the density correction value calculation table data and a function (that is, graph characteristics) set in the discharge correction amount calculation table data change according to the viscosity characteristic of the gel-like ink, the distance in the conveyance direction between the upstream recording head 240 and the downstream recording head 240, the ink discharge characteristic of the recording head 240 itself, the time from when the ink is discharged by the recording head 240 to when the fixing processing is performed by the fixing portion 25, and the like. Therefore, these pieces of data are set in advance for each type of the image forming apparatus 1 using experimental data and simulation.

Fig. 7C is a diagram illustrating an example of table data (hereinafter, referred to as "drive voltage correction table data") for calculating the correction amount of the piezoelectric drive voltage of the end portion nozzle 243 from the discharge correction amounts ΔLvc_U and ΔLvc_D per discharge by the end portion nozzle 243. Note that as the drive voltage correction table data, the same table data is applied to both the case of application to the discharge correction amount ΔLvc_U and the case of application to the discharge correction amount ΔLvc_D.

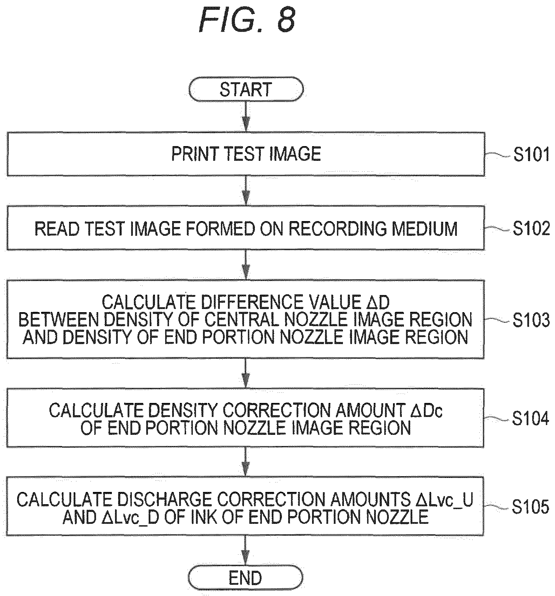

Fig. 8 is a flowchart describing an example of discharge correction amount calculation processing in the control portion 40 (here, processing of the test print execution portion 40a and the discharge correction amount setting portion 40b).

When setting the ink discharge correction amount at the overlapping portion R, the control portion 40 first refers to test image data 100a stored in the storage portion 100, and forms a test image for density detection on the recording medium P using the head unit 24 as test printing (step S101). For example, at the time of test printing, the control portion 40 causes all the nozzles 243 of the four recording heads 240 to discharge a predetermined amount of ink according to the test image data 100a.

Next, the control portion 40 causes the image reading portion 26 to read density information of the test image formed on the recording medium P (step S102).

Next, the control portion 40 calculates a difference value (central portion/end portion density difference ΔD) between the density of the image formed using the end portion nozzle 243 corresponding to the overlapping portion R in the nozzle row of the recording head 240 and the density of the image formed using the central nozzle 243 not corresponding to the overlapping portion R in the nozzle row of the recording head 240 from the density information of the test image formed on the recording medium P read by the image reading portion 26 (step S103).

Next, the control portion 40 calculates a density correction amount ΔDc of the image formed using the end portion nozzle 243 of the recording head 240 from the central portion/end portion density difference ΔD calculated in step S103 with reference to the density correction value calculation table data as illustrated in Fig. 7A (step S104).

Note that, in steps S 103 and S104, the control portion 40 calculates the central portion/end portion density difference ΔD (that is, the density correction amount ΔDc) for the image region formed by each of the four recording heads 240a to 240d. This is because the density of each of the image region formed using the nozzles 243 of the overlapping portion R between the recording head 240a and the recording head 240b, the image region formed using the nozzles 243 of the overlapping portion R between the recording head 240b and the recording head 240c, and the image region formed using the nozzles 243 of the overlapping portion R between the recording head 240c and the recording head 240d often differs depending on the deviation aspect of the positional relationship between the recording heads 240a to 240d in the head unit 24.

Next, the control portion 40 calculates the discharge correction amounts ΔLvc_U and ΔLvc_D of the ink of the end portion nozzle 243 for each of the plurality of recording heads 240 with reference to the discharge correction amount calculation table data as illustrated in Fig. 7B from the density correction amount ΔDc calculated in step S104 (step S105).

In step S105, the control portion 40 calculates the discharge correction amount ΔLvc_U of the ink of the end portion nozzle 243 by applying the first conversion table of the discharge correction amount calculation table data with regard to the upstream recording head 240, and calculates the discharge correction amount ΔLvc_D of the ink of the end portion nozzle 243 by applying the second conversion table of the discharge correction amount calculation table data with regard to the downstream recording head 240.

Note that, in step S105, the control portion 40 calculates the discharge correction amount (ΔLvc_U or ΔLvc_D) of the ink of the end portion nozzle 243 for each of the plurality of recording heads 240 from the density correction amount ΔDc calculated for each of the plurality of recording heads 240 (here, four recording heads 240a to 240d). Then, the control portion 40 stores the discharge correction amounts ΔLvc_U and ΔLvc_D calculated for each of the plurality of recording heads 240 (here, four recording heads 240a to 240d) in the storage portion 100 as correction data 100d.

Through such a series of processing, the control portion 40 can set the discharge correction amounts ΔLvc_U and ΔLvc_D for each of the plurality of recording heads 240 (here, four recording heads 240a to 240d).

In this flow, when a black streak occurs in an image formed on the recording medium P, the control portion 40 performs correction setting to adjust the image density by performing both the discharge amount Down of the nozzle 243 of the overlapping portion R of the downstream recording head 240 and the discharge amount Down of the nozzle 243 of the overlapping portion R of the upstream recording head 240. In addition, when a white streak occurs in an image formed on the recording medium P, the control portion 40 performs correction setting to adjust the image density by performing both the discharge amount Up of the nozzle 243 of the overlapping portion R of the downstream recording head 240 and the discharge amount Up of the nozzle 243 of the overlapping portion R of the upstream recording head 240.

Then, in a case where a black streak occurs in the image formed on the recording medium P, the control portion 40 calculates the discharge correction amount so that the correction amount (here, the correction in the Down direction) ΔLvc_D of the discharge amount of the nozzle 243 of the overlapping portion R of the downstream recording head 240 is set to be larger than the correction amount (here, the correction in the Down direction) ΔLvc_U of the discharge amount of the nozzle of the overlapping portion R of the upstream recording head 240. In addition, in a case where a white streak occurs in the image formed on the recording medium P, the control portion 40 calculates the discharge correction amount so that the correction amount (here, the correction in the Up direction) ΔLvc_D of the discharge amount of the nozzle 243 of the overlapping portion R of the downstream recording head 240 is set to be smaller than the correction amount (here, the correction in the Up direction) ΔLvc_U of the discharge amount of the nozzle of the overlapping portion R of the upstream recording head 240.

This makes it possible to more accurately set the discharge correction amount as compared with the correction processing of the image forming apparatus according to the conventional art, and thus, it is possible to more unfailingly suppress the streaky noise.

Next, processing in which the control portion 40 (driving condition determination portion 40c) determines the driving condition of the recording head 240 at the time of executing the actual printing will be described.

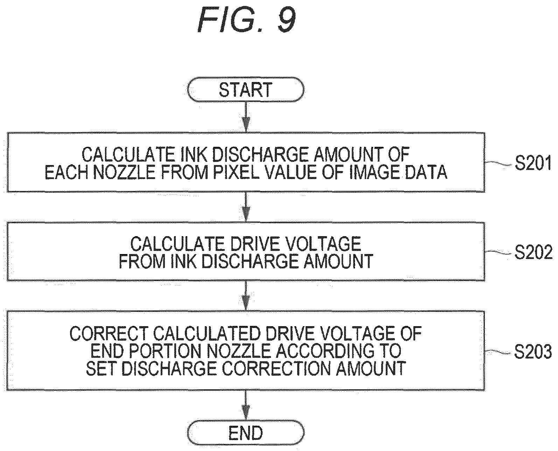

Fig. 9 is a flowchart describing an example of processing of determining the discharge amount of ink from each nozzle 243 of the recording head 240 at the time of executing actual printing in the control portion 40 (driving condition determination portion 40c). Here, the processing will be described focusing on one recording head 240 of the plurality of recording heads 240a to 240d of the head unit 24.

First, the control portion 40 converts print data received from an external apparatus (for example, a personal computer used by the user) into page image data in units of pages in accordance with print settings, and receives the page image data as one execution target job. Then, the control portion 40 calculates the discharge amount of ink of each nozzle 243 of the recording head 240 on the basis of the pixel value of the image data to be printed (step S201).

The input image data input from the external computer to the image forming apparatus 1 is expressed in a raster format or a vector format, and in step S201, for example, the control portion 40 converts the input image data into image data of a pixel value (for example, gradation values of four colors: Y, M, C, and K) for each pixel region of a two-dimensional pixel matrix, and calculates the discharge amount of ink of each nozzle 243 using a preset pixel value/ink discharge amount conversion table (not illustrated).

Note that the control portion 40 calculates the discharge amount of ink of each nozzle 243 of the recording head 240 such that at the overlapping portion, for example, both the nozzle 243 of the upstream recording head 240 and the nozzle 243 of the downstream recording head 240 are caused to discharge the ink and each dot of the image formed by the nozzles 243 of the overlapping portion is formed by overlapping the ink discharged from the nozzle 243 of the downstream recording head 240 on the ink discharged from the nozzle 243 of the upstream recording head 240. At this time, the control portion 40 may change the ratio of the ink to be discharged from the nozzle 243 of the upstream recording head 240 and the ink to be discharged from the nozzle 243 of the downstream recording head 240 forming each dot stepwise from the center side toward the end portion side of the nozzle row.

Next, the control portion 40 calculates driving conditions (for example, a piezoelectric drive voltage supplied to the image forming element of each nozzle 243) of each nozzle 243 of the recording head 240 from the ink discharge amount of each nozzle 243 of the recording head 240 using, for example, a preset ink discharge amount/drive voltage conversion table (not illustrated) (step S202).

Next, the control portion 40 corrects the piezoelectric drive voltage to be supplied to the image forming element of the end portion nozzle 243 of the recording head 240 using the drive voltage correction table data as illustrated in Fig. 7C on the basis of the discharge correction amount (that is, the discharge correction amounts ΔLvc_U and ΔLvc_D per discharge calculated in step S105) of the recording head 240 stored as the correction data 100d (step S203).

Note that the control portion 40 performs such drive voltage adjustment processing on each of the four recording heads 240a to 240d of the head unit 24. At that time, the control portion 40 corrects the drive voltage using the correction data 100d set for each of the four recording heads 240a to 240d.

According to the flow as described above, at the time of executing the actual printing, the control portion 40 adjusts the discharge amount of ink of each nozzle 243 of each of the plurality of recording heads 240, and can form an image in which the streaky noise is suppressed on the recording medium P.

As described above, the image forming apparatus 1 according to the present embodiment is configured such that, in consideration of the difference between the landing aspect of the ink discharged from the upstream recording head 240 and the landing aspect of the ink discharged from the downstream recording head 240, the discharge correction amounts (ΔLvc_U and ΔLvc_D) per discharge are calculated from the central portion/end portion density difference ΔD with reference to the predetermined conversion table in which the first conversion table to be applied to the upstream recording head 240 and the second conversion table to be applied to the downstream recording head 240 are separately set.

Accordingly, the image forming apparatus 1 according to the present embodiment can accurately adjust the density of the image formed by the nozzle 243 (that is, the end portion nozzle 243 in the nozzle row of the recording head 240) of the overlapping portion R of each of the plurality of recording heads 240a to 240d of the head unit 24. Thus, the streaky noise, which would otherwise be formed on the recording medium P, can be unfailingly suppressed.

### (Other Embodiment)

In the embodiment described above, as an example of the configuration of the control portion 40, the aspect has been indicated in which the discharge amount of ink discharged from the end portion nozzle 243 of the recording head 240 is corrected by correcting the piezoelectric drive voltage at the time of the actual printing. However, the control portion 40 may correct the discharge amount of ink discharged from the end portion nozzle 243 of each of the plurality of recording heads 240 by changing the discharge gradation of the head (the number of times of discharge of ink discharge per pixel region (multi-drop method)) instead of or in addition to the correction of the piezoelectric drive voltage.

For example, in the case of increasing the ink discharge amount, processing in which the discharge gradation is corrected from two times to three times or from three times to four times may be performed, and in the case of decreasing the ink discharge amount, processing in which the discharge gradation is corrected from three times to two times or from four times to three times may be performed.

With the image forming apparatus according to an embodiment of the present invention, it is possible to appropriately adjust the density of an image formed by nozzles of an overlapping portion of recording heads.

Although embodiments of the present invention have been described and illustrated in detail, the disclosed embodiments are made for purposes of illustration and example only and not limitation. The scope of the present invention should be interpreted by terms of the appended claims.

## Claims

1. An inkjet type image forming apparatus (1) including a plurality of recording heads (240) arranged in a staggered pattern, the image forming apparatus (1) comprising:
a test print execution portion (40a) that forms a test image for density detection on a recording medium (P) with the plurality of recording heads (240) and reads density information of the test image formed on the recording medium (P); the apparatus is **characterized by**
a discharge correction amount setting portion (40b) that calculates, for each of the plurality of recording heads (240), a difference value between density of an image formed using an end portion nozzle (243) of a nozzle row of the recording head (240) and density of an image formed using a central nozzle (243) of the nozzle row of the recording head (240) from the read density information of the test image, and sets a discharge correction amount per discharge when causing ink to be discharged from the end portion nozzle (243) at a time of executing actual printing on the basis of the difference value, wherein
the discharge correction amount setting portion (40b) is configured to convert the difference value into the discharge correction amount with reference to a predetermined conversion table in which a first conversion table to be applied to a recording head (240) on an upstream side in a conveyance direction of the recording medium (P) among the plurality of recording heads (240) and a second conversion table to be applied to a recording head (240) on a downstream side in the conveyance direction of the recording medium (P) among the plurality of recording heads (240) are separately set.

2. The image forming apparatus (1) according to claim 1, wherein
the first and second conversion tables
in a case of a first aspect in which the density of the image formed using the end portion nozzle (243) in the test image is higher than the density of the image formed using the central nozzle (243), converts the difference value into the discharge correction amount in a direction of decreasing the discharge amount of the ink of the end portion nozzle (243), and
in a case of a second aspect in which the density of the image formed using the end portion nozzle (243) in the test image is lower than the density of the image formed using the central nozzle (243), converts the difference value into the discharge correction amount in a direction of increasing the discharge amount of the ink of the end portion nozzle (243).

3. The image forming apparatus (1) according to claim 2, wherein
in the first aspect,
the discharge correction amount per unit amount of the difference value of the first conversion table is set
to be smaller than the discharge correction amount per unit amount of the difference value of the second conversion table, and
in the second aspect,
the discharge correction amount per unit amount of the difference value of the first conversion table is set
to be larger than the discharge correction amount per unit amount of the difference value of the second conversion table.

4. The image forming apparatus (1) according to claim 1, wherein
the discharge correction amount setting portion (40b) corrects the discharge amount of the ink discharged from the end portion nozzle (243) of each of the plurality of recording heads (240) by changing a piezoelectric drive voltage supplied to an image forming element of the end portion nozzle (243) of each of the plurality of recording heads (240).

5. The image forming apparatus (1) according to claim 1, wherein
the discharge correction amount setting portion (40b) corrects the discharge amount of the ink discharged from the end portion nozzle (243) of each of the plurality of recording heads (240) by changing a discharge gradation of the end portion nozzle (243) of each of the plurality of recording heads (240).

6. The image forming apparatus (1) according to claim 1, comprising:
a driving condition determination portion (40c) that calculates a discharge amount of ink of each nozzle of each of the plurality of recording heads (240) on the basis of a pixel value of image data to be printed and determines a driving condition of each of the plurality of recording heads (240) at the time of executing the actual printing, wherein
the driving condition determination portion (40c) corrects the driving condition of each of the plurality of recording heads (240) on the basis of the discharge correction amount set for each of the plurality of recording heads (240).

7. The image forming apparatus (1) according to claim 1, wherein the ink is a gel-like ink.

8. A control method for an inkjet type image forming apparatus (1) including a plurality of recording heads (240) arranged in a staggered pattern, the method comprising:
first processing of forming a test image for density detection on a recording medium (P) with the plurality of recording heads (240) and reading density information of the test image formed on the recording medium (P); and
second processing of calculating, for each of the plurality of recording heads (240), a difference value between density of an image formed using an end portion nozzle (243) of a nozzle row of the recording head (240) and density of an image formed using a central nozzle (243) of the nozzle row of the recording head (240) from the read density information of the test image, and setting a discharge correction amount per discharge when causing ink to be discharged from the end portion nozzle (243) at a time of executing actual printing on the basis of the difference value, wherein
the second processing is configured to convert the difference value into the discharge correction amount with reference to a predetermined conversion table in which a first conversion table to be applied to a recording head (240) on an upstream side in a conveyance direction of the recording medium (P) among the plurality of recording heads (240) and a second conversion table to be applied to a recording head (240) on a downstream side in the conveyance direction of the recording medium (P) among the plurality of recording heads (240) are separately set.

9. A control program for an inkjet type image forming apparatus (1) including a plurality of recording heads (240) arranged in a staggered pattern, the program when executed by the image forming apparatus (1) performing the steps of:
first processing of forming a test image for density detection on a recording medium (P) with the plurality of recording heads (240) and reading density information of the test image formed on the recording medium (P); and
second processing of calculating, for each of the plurality of recording heads (240), a difference value between density of an image formed using an end portion nozzle (243) of a nozzle row of the recording head (240) and density of an image formed using a central nozzle (243) of the nozzle row of the recording head (240) from the read density information of the test image, and setting a discharge correction amount per discharge when causing ink to be discharged from the end portion nozzle (243) at a time of executing actual printing on the basis of the difference value, wherein
the second processing is configured to convert the difference value into the discharge correction amount with reference to a predetermined conversion table in which a first conversion table to be applied to a recording head (240) on an upstream side in a conveyance direction of the recording medium (P) among the plurality of recording heads (240) and a second conversion table to be applied to a recording head (240) on a downstream side in the conveyance direction of the recording medium (P) among the plurality of recording heads (240) are separately set.

## Patentansprüche

1. Eine Tintenstrahl-Typ-Bilderzeugungsvorrichtung (1), umfassend eine Vielzahl von in einem versetzten Muster angeordneten Aufzeichnungsköpfen (240), die Bilderzeugungsvorrichtung (1) umfassend:
einen Testdruckausführungsabschnitt (40a), der mit der Vielzahl von Aufzeichnungsköpfen (240) ein Testbild zur Dichteerkennung auf einem Aufzeichnungsmedium (P) bildet und Dichteinformationen des auf dem Aufzeichnungsmedium (P) erzeugten Testbildes liest; die Vorrichtung ist **gekennzeichnet durch**
einen Ausstoßkorrekturbetrag-Einstellabschnitt (40b), der für jeden der Vielzahl der Aufzeichnungsköpfe (240) einen Differenzwert zwischen einer Dichte eines durch eine Endabschnittsdüse (243) einer Düsenreihe des Aufzeichnungskopfes (240) gebildeten Bildes und einer Dichte eines durch eine mittlere Düse (243) der Düsenreihe des Aufzeichnungskopfes (240) gebildeten Bildes aus den gelesenen Dichteinformationen des Testbildes berechnet und auf der Grundlage des Differenzwertes einen Ausstoßkorrekturbetrag pro Ausstoß festlegt, wenn er zu einem Zeitpunkt der Ausführung des tatsächlichen Druckens veranlasst, dass Tinte aus der Endabschnittsdüse (243) ausgestoßen wird, wobei
der Ausstoßkorrekturbetrag-Einstellabschnitt (40b) dazu eingerichtet ist, den Differenzwert unter Bezugnahme auf eine vorbestimmte Umrechnungstabelle in den Ausstoßkorrekturbetrag umzurechnen, wobei in der Umrechnungstabelle eine erste Umrechnungstabelle, die auf einen Aufzeichnungskopf (240) auf einer stromaufwärtigen Seite in einer Transportrichtung des Aufzeichnungsmediums (P) unter der Vielzahl der Aufzeichnungsköpfe (240) anzuwenden ist, und eine zweite Umrechnungstabelle, die auf einen Aufzeichnungskopf (240) auf einer stromabwärtigen Seite in der Transportrichtung des Aufzeichnungsmediums (P) unter der Vielzahl der Aufzeichnungsköpfe (240) anzuwenden ist, separat festgelegt sind.

2. Die Bilderzeugungsvorrichtung (1) gemäß Anspruch 1, wobei
die erste und zweite Umrechnungstabelle
in einem Fall eines ersten Aspekts, in dem die Dichte des mit der Endabschnittsdüse (243) gebildeten Bildes im Testbild höher ist als die Dichte des mit der mittleren Düse (243) gebildeten Bildes, den Differenzwert in den Ausstoßkorrekturbetrag in einer Richtung umrechnen, die den Ausstoßbetrag der Tinte der Endabschnittsdüse (243) verringert, und
in einem Fall eines zweiten Aspekts, in dem die Dichte des mit der Endabschnittsdüse (243) gebildeten Bildes im Testbild geringer ist als die Dichte des mit der mittleren Düse (243) gebildeten Bildes, den Differenzwert in den Ausstoßkorrekturbetrag in einer Richtung umwandelt, die den Ausstoßbetrag der Tinte der Endabschnittsdüse (243) erhöht.

3. Die Bilderzeugungsvorrichtung (1) gemäß Anspruch 2, wobei
im ersten Aspekt
der Ausstoßkorrekturbetrag pro Einheitsmenge des Differenzwerts der ersten Umrechnungstabelle kleiner als der Ausstoßkorrekturbetrag pro Einheitsmenge des Differenzwerts der zweiten Umrechnungstabelle festgelegt ist, und
im zweiten Aspekt
der Ausstoßkorrekturbetrag pro Einheitsmenge des Differenzwerts der ersten Umrechnungstabelle größer als der Ausstoßkorrekturbetrag pro Einheitsmenge des Differenzwerts der zweiten Umrechnungstabelle festgelegt ist.

4. Die Bilderzeugungsvorrichtung (1) gemäß Anspruch 1, wobei
der Ausstoßkorrekturbetrag-Einstellabschnitt (40b) den Ausstoßbetrag der aus der Endabschnittsdüse (243) jedes der Vielzahl der Aufzeichnungsköpfe (240) ausgestoßenen Tinte korrigiert, indem er eine piezoelektrische Ansteuerspannung ändert, die einem Bilderzeugungselement der Endabschnittsdüse (243) jedes der Vielzahl der Aufzeichnungsköpfe (240) bereitgestellt wird.

5. Die Bilderzeugungsvorrichtung (1) gemäß Anspruch 1, wobei
der Ausstoßkorrekturbetrag-Einstellabschnitt (40b) den Ausstoßbetrag der aus der Endabschnittsdüse (243) jedes der Vielzahl der Aufzeichnungsköpfe (240) ausgestoßenen Tinte korrigiert, indem er eine Ausstoßabstufung der Endabschnittsdüse (243) jedes der Vielzahl der Aufzeichnungsköpfe (240) ändert.

6. Die Bilderzeugungsvorrichtung (1) gemäß Anspruch 1, umfassend:
einen Antriebszustandsbestimmungsabschnitt (40c), der einen Ausstoßbetrag von Tinte jeder Düse jedes der Vielzahl der Aufzeichnungsköpfe (240) auf der Grundlage eines Pixelwerts von zu druckenden Bilddaten berechnet und einen Antriebszustand jedes der Vielzahl der Aufzeichnungsköpfe (240) zum Zeitpunkt der Ausführung des tatsächlichen Druckens bestimmt, wobei
der Antriebszustandsbestimmungsabschnitt (40c) den Antriebszustand jedes der Vielzahl der Aufzeichnungsköpfe (240) auf der Grundlage des für jeden der Vielzahl der Aufzeichnungsköpfe (240) festgelegten Ausstoßkorrekturbetrags korrigiert.

7. Die Bilderzeugungsvorrichtung (1) gemäß Anspruch 1, wobei die Tinte eine gelartige Tinte ist.

8. Ein Steuerungsverfahren für eine Tintenstrahl-Typ-Bilderzeugungsvorrichtung (1), die eine Vielzahl von in einem versetzten Muster angeordneten Aufzeichnungsköpfen (240) enthält, das Verfahren umfassend:
eine erste Verarbeitung des Bildens eines Testbildes zur Dichteerkennung auf einem Aufzeichnungsmedium (P) mit der Vielzahl von Aufzeichnungsköpfen (240) und des Lesens von Dichteinformationen des auf dem Aufzeichnungsmedium (P) gebildeten Testbildes; und
eine zweite Verarbeitung des Berechnens, für jeden der Vielzahl der Aufzeichnungsköpfe (240), eines Differenzwerts zwischen einer Dichte eines durch eine Endabschnittsdüse (243) einer Düsenreihe des Aufzeichnungskopfes (240) gebildeten Bildes und der Dichte eines durch eine mittlere Düse (243) der Düsenreihe des Aufzeichnungskopfes (240) gebildeten Bildes aus den gelesenen Dichteinformationen des Testbildes und des Festlegens eines Ausstoßkorrekturbetrags pro Ausstoß, wenn zu einem Zeitpunkt der Ausführung des tatsächlichen Druckens auf der Grundlage des Differenzwerts Tinte aus der Endabschnittsdüse (243) ausgestoßen wird, wobei
die zweite Verarbeitung dazu eingerichtet ist, den Differenzwert unter Bezugnahme auf eine vorbestimmte Umrechnungstabelle in den Ausstoßkorrekturbetrag umzurechnen, wobei in der Umrechnungstabelle eine erste Umrechnungstabelle, die auf einen Aufzeichnungskopf (240) auf einer stromaufwärtigen Seite in einer Transportrichtung des Aufzeichnungsmediums (P) unter der Vielzahl der Aufzeichnungsköpfe (240) anzuwenden ist, und eine zweite Umrechnungstabelle, die auf einen Aufzeichnungskopf (240) auf einer stromabwärtigen Seite in der Transportrichtung des Aufzeichnungsmediums (P) unter der Vielzahl der Aufzeichnungsköpfe (240) anzuwenden ist, separat festgelegt sind.

9. Ein Steuerprogramm für eine Tintenstrahl-Typ-Bildgebungsvorrichtung (1), die eine Vielzahl von in einem versetzten Muster angeordneten Aufzeichnungsköpfen (240) enthält, wobei das Programm, wenn es von der Bildgebungsvorrichtung (1) ausgeführt wird, die folgenden Schritte ausführt:
eine erste Verarbeitung des Bildens eines Testbildes zur Dichteerkennung auf einem Aufzeichnungsmedium (P) mit der Vielzahl von Aufzeichnungsköpfen (240) und des Lesens von Dichteinformationen des auf dem Aufzeichnungsmedium (P) gebildeten Testbildes; und
eine zweite Verarbeitung des Berechnens, für jeden der Vielzahl der Aufzeichnungsköpfe (240), eines Differenzwerts zwischen einer Dichte eines durch eine Endabschnittsdüse (243) einer Düsenreihe des Aufzeichnungskopfes (240) gebildeten Bildes und der Dichte eines durch eine mittlere Düse (243) der Düsenreihe des Aufzeichnungskopfes (240) gebildeten Bildes aus den gelesenen Dichteinformationen des Testbildes und des Festlegens eines Ausstoßkorrekturbetrags pro Ausstoß, wenn zu einem Zeitpunkt des Ausführens eines tatsächlichen Druckens auf der Grundlage des Differenzwerts Tinte aus der Endabschnittsdüse (243) ausgestoßen wird, wobei
die zweite Verarbeitung dazu eingerichtet ist, den Differenzwert unter Bezugnahme auf eine vorbestimmte Umrechnungstabelle in den Ausstoßkorrekturbetrag umzurechnen, wobei in der Umrechnungstabelle eine erste Umrechnungstabelle, die auf einen Aufzeichnungskopf (240) auf einer stromaufwärtigen Seite in einer Transportrichtung des Aufzeichnungsmediums (P) unter der Vielzahl der Aufzeichnungsköpfe (240) anzuwenden ist, und eine zweite Umrechnungstabelle, die auf einen Aufzeichnungskopf (240) auf einer stromabwärtigen Seite in der Transportrichtung des Aufzeichnungsmediums (P) unter der Vielzahl der Aufzeichnungsköpfe (240) anzuwenden ist, separat festgelegt sind.

## Revendications

1. Appareil de formation d'image de type à jet d'encre (1) comprenant une pluralité de têtes d'enregistrement (240) disposées selon un motif décalé, l'appareil de formation d'image (1) comprenant :
une partie d'exécution d'impression test (40a) qui forme une image test pour la détection de densité sur un support d'enregistrement (P) avec la pluralité de têtes d'enregistrement (240) et lit des informations de densité à partir de l'image test formée sur le support d'enregistrement (P) ; l'appareil est **caractérisé par**
une partie de définition de la quantité de correction de décharge (40b) qui calcule, pour chacune de la pluralité de têtes d'enregistrement (240), une valeur de différence entre une densité d'une image formée utilisant une buse de partie terminale (243) d'une rangée de buses de la tête d'enregistrement (240) et une densité d'une image formée utilisant une buse centrale (243) de la rangée de buses de la tête d'enregistrement (240) à partir des informations de densité lues de l'image test, et définit une quantité de correction de décharge par décharge lorsque provoquant de l'encre à être déchargée à partir de la buse de partie terminale (243) à un moment d'exécution de l'impression réelle sur la base de la valeur de différence, dans lequel
la partie de définition de la valeur de correction de décharge (40b) est configurée pour convertir la valeur de différence en la quantité de correction de décharge par référence à une table de conversion prédéfinie dans laquelle une première table de conversion à appliquer à une tête d'enregistrement (240) d'un côté amont dans la direction de transport du support d'enregistrement (P) parmi la pluralité de têtes d'enregistrement (240) et une deuxième table de conversion à appliquer à une tête d'enregistrement (240) d'un côté aval dans la direction de transport du support d'enregistrement (P) parmi la pluralité de têtes d'enregistrement (240) sont définies séparément.

2. L'appareil de formation d'image (1) selon la revendication 1, dans lequel
les première et deuxième tables de conversion,
dans un cas d'un premier aspect où la densité de l'image formée utilisant la buse de partie terminale (243) dans l'image test est supérieure à la densité de l'image formée utilisant la buse centrale (243), convertit la valeur de différence en la quantité de correction de décharge dans la direction d'une diminution de la quantité de décharge de l'encre de la buse de partie terminale (243), et
dans un cas d'un deuxième aspect où la densité de l'image formée utilisant la buse de partie terminale (243) dans l'image test est inférieure à la densité de l'image formée utilisant la buse centrale (243), convertit la valeur de différence en la quantité de correction de décharge dans la direction d'une augmentation de la quantité de décharge de l'encre de la buse de partie terminale (243).

3. L'appareil de formation d'image (1) selon la revendication 2, dans lequel
dans le premier aspect,
la quantité de correction de décharge par unité de quantité de la valeur de différence de la première table de conversion est définie pour être inférieure à la quantité de correction de décharge par unité de quantité de la valeur de différence de la deuxième table de conversion, et
dans le deuxième aspect,
la quantité de correction de décharge par unité de quantité de la valeur de différence de la première table de conversion est définie pour être supérieure à la quantité de correction de décharge par unité de quantité de la valeur de différence de la deuxième table de conversion.

4. L'appareil de formation d'image (1) selon la revendication 1, dans lequel
la partie de définition de la quantité de correction de décharge (40b) corrige la quantité de décharge de l'encre déchargée à partir de la buse de partie terminale (243) de chacune de la pluralité de têtes d'enregistrement (240) en modifiant une tension d'entraînement piézoélectrique fournie à un élément de formation d'image de la buse de partie terminale (243) de chacune de la pluralité de têtes d'enregistrement (240).

5. L'appareil de formation d'image (1) selon la revendication 1, dans lequel
la partie de définition de la quantité de correction de décharge (40b) corrige la quantité de décharge de l'encre déchargée à partir de la buse de partie terminale (243) de chacune de la pluralité de têtes d'enregistrement (240) en modifiant une gradation de décharge de la buse de partie terminale (243) de chacune de la pluralité de têtes d'enregistrement (240).

6. L'appareil de formation d'image (1) selon la revendication 1, comprenant :
une partie de détermination des conditions d'entraînement (40c) qui calcule une quantité de décharge d'encre de chaque buse de chacune de la pluralité de têtes d'enregistrement (240) sur la base d'une valeur de pixel des données d'image à être imprimées et détermine une condition d'entraînement de chacune de la pluralité de têtes d'enregistrement (240) au moment d'exécution de l'impression réelle, dans lequel
la partie de détermination des conditions d'entraînement (40c) corrige les conditions d'entraînement de chacune de la pluralité de têtes d'enregistrement (240) sur la base de la quantité de correction de décharge définie pour chacune de la pluralité de têtes d'enregistrement (240).

7. L'appareil de formation d'image (1) selon la revendication 1, dans lequel l'encre est une encre de type gel.

8. Procédé de contrôle pour un appareil de formation d'image de type à jet d'encre (1) comprenant une pluralité de têtes d'enregistrement (240) disposées selon un motif décalé, le procédé comprenant :
un premier traitement consistant à former une image test pour la détection de densité sur un support d'enregistrement (P) avec la pluralité de têtes d'enregistrement (240) et à lire des informations de densité de l'image test formée sur le support d'enregistrement (P) ; et
un second traitement consistant à calculer, pour chacune de la pluralité de têtes d'enregistrement (240), une valeur de différence entre la densité d'une image formée utilisant une buse de partie terminale (243) d'une rangée de buses de la tête d'enregistrement (240) et la densité d'une image formée utilisant une buse centrale (243) de la rangée de buses de la tête d'enregistrement (240) à partir des informations de densité lues de l'image test, et à définir une quantité de correction de décharge par décharge lors que provocant de l'encre à être déchargée à partir de la buse de partie terminale (243) à un moment d'exécution de l'impression réelle sur la base de la valeur de différence, dans lequel
le deuxième traitement est configuré pour convertir la valeur de différence en la quantité de correction de décharge par référence à une table de conversion prédéfinie dans laquelle une première table de conversion à appliquer à une tête d'enregistrement (240) d'un côté amont dans la direction de transport du support d'enregistrement (P) parmi la pluralité de têtes d'enregistrement (240) et une deuxième table de conversion à appliquer à une tête d'enregistrement (240) d'un côté aval dans la direction de transport du support d'enregistrement (P) parmi la pluralité de têtes d'enregistrement (240) sont définies séparément.

9. Programme de contrôle pour un appareil de formation d'image de type à jet d'encre (1) comprenant une pluralité de têtes d'enregistrement (240) disposées selon un motif décalé, le programme, lorsqu'il est exécuté par l'appareil de formation d'image (1), effectuant les étapes suivantes :
un premier traitement consistant à former une image test pour la détection de densité sur un support d'enregistrement (P) avec la pluralité de têtes d'enregistrement (240) et à lire des informations de densité de l'image test formée sur le support d'enregistrement (P) ; et
un second traitement consistant à calculer, pour chacune de la pluralité de têtes d'enregistrement (240), une valeur de différence entre la densité d'une image formée utilisant une buse de partie terminale (243) d'une rangée de buses de la tête d'enregistrement (240) et la densité d'une image formée utilisant une buse centrale (243) de la rangée de buses de la tête d'enregistrement (240) à partir des informations de densité lues de l'image test, et à définir une quantité de correction de décharge par décharge lorsque provoquant de l'encre à être déchargée à partir de la buse de partie terminale (243) au moment d'exécution de l'impression réelle sur la base de la valeur de différence, dans lequel
le deuxième traitement est configuré pour convertir la valeur de différence en la quantité de correction de décharge par référence à une table de conversion prédéterminée dans laquelle une première table de conversion à appliquer à une tête d'enregistrement (240) d'un côté amont dans la direction de transport du support d'enregistrement (P) parmi la pluralité de têtes d'enregistrement (240) et une deuxième table de conversion à appliquer à une tête d'enregistrement (240) d'un côté aval dans la direction de transport du support d'enregistrement (P) parmi la pluralité de têtes d'enregistrement (240) sont définies séparément.
